# EUROPEAN PATENT APPLICATION

(11) **EP 3 862 935 A1**
(43) Date of publication of application: **11.08.2021**
(21) Application number: 20155507.5
(22) Date of filing: 04.02.2020
(51) Int. Cl.: G06Q 10/04, G06Q 10/06, G06Q 10/08

(54) **FOOD WASTE MANAGING METHOD AND SYSTEM**

(71) Applicant: Saul, Ronny, 2860 Søborg (DK)
(72) Inventor: Saul, Ronny, 2860 Søborg (DK)
(74) Representative: Dragsted Partners A/S

(57) **Abstract**

The present invention relates to a food waste managing method for at least one serving comprising a plurality of users selecting one or more available food options measuring an amount of food for each food option during the serving, comparing the measured amount of food for at least one of the food options, determining selection data of one of the food options from said comparison, and determining initial available amount of each food option and/or type of food options for a future serving based on the selection data for minimising food waste. Moreover, the present invention relates to a food waste managing method for at least one serving comprising a plurality of users selecting one or more available food options and a food waste managing system for monitoring at least one serving comprising a plurality of users selecting one or more available food options.

## Description

The present invention relates to a food waste managing method for at least one serving comprising a plurality of users selecting one or more available food options, the method comprising measuring an amount of food for each food option during the serving, comparing the measured amount of food for at least one of the food options, determining selection data of one of the food options from said comparison, and determining initial available amount of each food option and/or type of food options for a future serving based on the selection data for minimising food waste. Moreover, the present invention relates a food waste managing system for monitoring at least one serving comprising a plurality of users selecting one or more available food options.

Countries around the world have an increased focus on reducing the emission of carbon dioxide (CO₂), i.e. reducing their carbon footprint, in order to save the environment. Young people become vegetarians to participate in reducing the CO₂-emission, and many households have an increased focus on not wasting edible food. In many food stores, the stores have made special marking of food as still edible even though the sales date is due.

Restaurants and other food preparing places are all focusing on not making more food than is ordered but once prepared and served, the prepared food cannot be saved to the next day and re-sold. Thus, in the food serving business it is difficult to reduce the food waste. Some restaurants have a weight under the garbage can to weigh how much food they waste on a daily basis; however, this does not give any indication as to why less food is wasted during one day compared to another day, and thus gives no indication of what to change in order to reduce the food waste in future servings.

It is an object of the present invention to wholly or partly overcome the above disadvantages and drawbacks of the prior art. More specifically, it is an object to provide an improved method and system for reducing food waste in the food serving business.

The above objects, together with numerous other objects, advantages and features, which will become evident from the below description, are accomplished by a solution in accordance with the present invention by a food waste managing method for at least one serving comprising a plurality of users selecting one or more available food options, the method comprising:
- measuring an amount of food for each food option during the serving,
- comparing the measured amount of food for at least one of the food options,
- determining selection data of one of the food options from said comparison, and
- determining initial available amount of each food option and/or type of food options for a future serving based on the selection data for minimising food waste.

In one embodiment, the selection is at least two or more available food options.

Moreover, the step of comparing may be performed by comparing measured amount of food for a specific food option of a first serving with a measured amount of food for the same food option of a second serving.

In addition, the step of comparing may be performed by comparing a first measured amount of food for a specific food option of a specific serving with a second measured amount of food for the same food option of the same serving.

Furthermore, the step of comparing may be performed by comparing a measured amount of food for a first food option of a specific serving with a measured amount of food for a second food option of the same serving.

Additionally, the step of comparing may be performed by comparing a measured amount of food for a first food option of a first serving with a measured amount of food for a second food option of a second serving.

Also, the step of determining selection data may be performed by determining a total amount of selected food at a specific time of a specific selected food option during or after one serving.

Further, the step of determining selection data may be performed by determining a selection rate of a specific food option during one serving.

Moreover, the step of determining selection data may be performed by determining an order of selection for at least two food options during one serving by identifying the food option being selected after a previously selected food option.

In addition, the waste managing method may further comprise comparing selection data of a first serving with selection data of a second serving.

Furthermore, the step of measuring an amount of food may be performed by a scale, a camera, or another sensor.

Additionally, the food waste managing method may further comprise receiving information about the users of the current serving.

Also, the food waste managing method may further comprise receiving information about the users of the future serving.

Further, the step of determining initial available amount of each food option and/or type of food options for the future serving may be based on the received information about users of the current serving and/or about users of the future serving and/or about users of a previous serving.

Moreover, the step of determining initial available amount of each food option and/or type of food options for the future serving may be based on a predicted user information. While information about users of a serving is usually accurate and valid, such as known age, number of users, gender, etc., predicted user information is within this context to be interpreted as assumed, not necessarily correct, information. For example, if one previous serving offered a specific dish, resulting in a certain number of customers or users for that serving, it would be possible to predict user information (e.g. total number of customers/user) for a future serving offering the same specific dish.

In addition, the food waste managing method may further comprise receiving user information of a previous serving.

Furthermore, the user may select one or more food options onto a platter and the food waste managing method may further comprise measuring the platter after the serving in order to determine whether the selected food option(s) has been eaten by the user.

The present invention also relates to a food waste managing method for at least one serving comprising a plurality of users selecting one or more available food options:
- measuring an amount of food for each food option during the serving,
- comparing the measured amount of food for at least one of the food options,
- determining selection data of one of the food options from said comparison, and
- sending a notification to a control unit in order to notify personal to fill up the food option based on the selection data.

In addition, the food waste managing method may further comprise transmitting continuously the selection data to the control unit "live".

The present invention also relates to a food waste managing method for at least one serving comprising a plurality of users selecting one or more available food options, the method comprising:
- receiving selection data of one of the food options, said selection data corresponding to a comparison of measured amount of food for at least one of the food options during a previous serving, and
- determining initial available amounts of each food option and/or type of food options for a future serving based on the selection data for minimising food waste.

The present invention further relates to a food waste managing system for monitoring at least one serving comprising a plurality of users selecting one or more available food options, the system comprising:
- at least one sensor unit configured to measuring an amount of food for each food option during the serving, and
- a control unit configured to:
   - receive a measured amount of food from the sensor unit,
   - compare the measured amount of food for at least one of the food options,
   - determine selection data of one of the food options from said comparison, and
   - determine initial available amounts of each food option and/or type of food options for a future serving based on the selection data for minimising food waste.

The control unit may comprise a computer or processor being arranged remotely from the serving and wherein the computer or processor performs one or more of the following steps:
- receive a measured amount of food from the sensor unit,
- compare the measured amount of food for at least one of the food options,
- determine selection data of one of the food options from said comparison, and
- determine initial available amounts of each food option and/or type of food options for a future serving based on the selection data for minimising food waste.

Moreover, the computer or processor may be cloud-based.

Furthermore, the sensor unit may comprise a scale, a camera or similar sensor.

Additionally, the sensor unit may comprise a battery, a storage, an identification tag, a communication module, and/or a timer.

Also, the scale may comprise at least one load cell.

In addition, the sensor unit may form part of a sensor housing, the sensor housing being arranged to support the specific food option of the serving.

Moreover, the sensor housing may comprise a display for indicating the type of food option currently supported by the sensor housing.

Further, the control unit may be arranged remotely from the at least one sensor unit and configured to communicate wirelessly with the at least one sensor unit.

Additionally, a sensor unit may be configured to form part of the system.

Furthermore, a computer programme is provided, comprising programme instructions for causing a computer to perform the methods of managing food waste as defined herein when the programme is run on the computer.

Also, a computer programme product is provided, comprising a computer-readable medium, having thereon computer programme code means, when said computer programme product is loaded, to make a computer execute the methods of managing food waste as defined herein.

The invention further relates to a sensor unit for arrangement underneath a platter with a specific food option during a serving comprising one or more user(s) selecting one or more available food option(s), the sensor unit comprising:
- a sensor housing, the sensor housing being arranged to support the specific food option of the platter of the serving,
- a scale comprising at least one load cell for weighing the food taken from the platter,
- a battery for powering at least the scale,
- a storage for storing measured data,
- an identification tag, and
- a communication module,
wherein the sensor unit further comprises a detachable display.

In addition, the sensor housing may further comprise an electric connection for communicating with the display.

Furthermore, the display may comprise an electric connection for communicating with the electric connection of the sensor housing.

Also, the communication between the electric connection of the display and the electric connection of the sensor housing may be in the form of pogo pins or wireless using induction, and/or radio communication.

Induction may also handle the wireless transfer of power to the display.

Additionally, the communication between the electric connection of the display and the electric connection of the sensor housing may be wireless.

Furthermore, the display may be an E ink display, also called electric ink display.

In addition, the detachable display may have an E ink displaying area.

Also, the display may have an upright portion comprising the E ink displaying area and a base for providing a support for the upright portion so that the display is able to stand on its own and be more clearly visible for the users.

Furthermore, the sensor unit may further comprise a timer.

Also, the sensor unit may instead of a scale measure the selected amount of food with a camera or similar sensor suitable to measure an amount or quantity of food.

Furthermore, the sensor unit may further comprise at least three legs for supporting the sensor housing.

In addition, the sensor housing may be plate shaped having a height of 0.5-5.0 cm.

Additionally, the sensor unit may further comprise a temperature altering element such as a heating element or a cooling element.

Furthermore, the sensor unit may comprise a temperature distributing element.

The temperature distributing element and the temperature altering element may be the same element.

In addition, the temperature distributing element may comprise a first contact element for contacting a table temperature altering element and a second contact element connected to an inner face of the sensor housing, the first contact element and the second contact element being connected by means of a temperature conducting wire(s).

Also, the first contact element, the second contact element and the temperature conducting wire may be encapsulated by insulation. The insulation and the conducting wire(s) may be flexible.

The invention further relates to a sensor unit for arrangement underneath a platter with a specific food option during a serving comprising one or more user(s) selecting one or more available food option(s), the sensor unit comprising:
- a sensor housing, the sensor housing being arranged to support the specific food option of the platter of the serving,
- a scale comprising at least one load cell for weighing the food taken from the platter,
- a battery for powering at least the scale,
- a storage for storing measured data,
- an identification tag,
- a communication module, and
- a display,
wherein the sensor unit further comprises a temperature distributing element.

In addition, the sensor unit may further comprise a temperature altering element, such as a heating element or a cooling element.

Furthermore, the temperature distributing element and the temperature altering element may be the same element.

Also, the temperature distributing element may comprise a first contact element for contacting a table temperature altering element and a second contact element connected to an inner face of the sensor housing, the first contact element and the second contact element being connected by means of a temperature conducting wire.

In addition, the first contact element, the second contact element and the temperature conducting wire may be encapsulated by insulation. The insulation may be flexible.

Also, the display may be detachable.

Furthermore, the sensor housing may further comprise an electric connection for communicating with the display.

Additionally, the display may comprise an electric connection for communicating with the electric connection of the sensor housing.

Also, the communication between the electric connection of the display and the electric connection of the sensor housing may be in the form of pogo pins or wireless using induction, and/or radio communication.

Furthermore, the communication between the electric connection of the display and the electric connection of the sensor housing may be wireless.

In addition, the display may be an E ink display, also called electric ink display.

Furthermore, the detachable display may have an E ink displaying area.

Additionally, the display may have an upright portion comprising the E ink displaying area and a base for providing a support for the upright portion so that the display is be able to stand on its own.

Also, the sensor unit may further comprise a timer.

In addition, the sensor unit may instead of a scale measure the selected amount of food with a camera or similar sensor suitable to measure an amount or quantity of food.

Also, the sensor may further comprise at least three legs.

Furthermore, the sensor housing may be plate shaped having a height of 0.5-5.0 cm.

The invention and its many advantages will be described in more detail below with reference to the accompanying schematic drawings, which for the purpose of illustration show some non-limiting embodiments and in which:
Fig. 1 shows a food waste managing system monitoring a serving of several food options on a buffet,
Fig. 2A shows a platter of a food option supported by a sensor unit for measuring the amount of the food option taken during a serving,
Fig. 2B shows a platter of a food option supported by another sensor unit for measuring the amount of the food option taken during a serving,
Fig. 2C shows a platter of a food option supported by yet another sensor unit for measuring the amount of the food option taken during a serving,
Fig. 3 is a schematic view of a sensor unit,
Fig. 4 shows a food waste managing method according to an embodiment,
Fig. 5 shows a food waste managing method according to another embodiment, and
Fig. 6 shows a food waste managing method according to yet another embodiment,
Fig. 7A shows a detachable display seen from the front and into an E ink displaying area,
Fig. 7B shows the detachable display of Fig. 7A from the back side showing a base for suppporting the display,
Fig. 7C shows the detachable display of Fig. 7A from a side in an upright position standing on its own,
Fig. 7D shows the detachable display of Fig. 7A attached on an outside of a sensor housing, and
Fig. 8 shows a cross sectional view of yet another sensor unit.

All the figures are highly schematic and not necessarily to scale, and they show only those parts which are necessary in order to elucidate the invention, other parts being omitted or merely suggested.

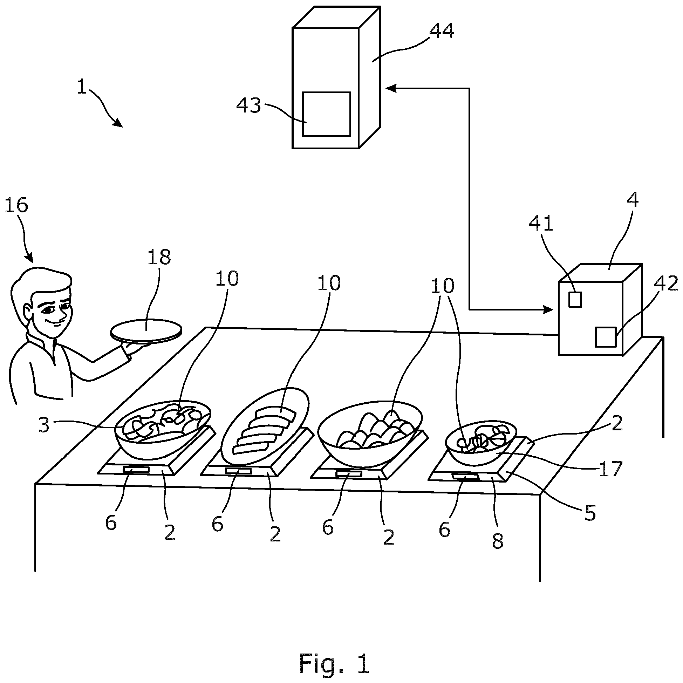

Fig. 1 shows a food waste managing system 1 for monitoring at least one serving comprising a plurality of users 16 selecting one or more available food options 10 from a buffet with several platters 17. Each platter contains one specific food option 10. The users being people each take a plate 18 and selects food from the platters, thus selecting individual amounts of at least one of the food options from the buffet. Each platter 17 is supported by a sensor unit 2 configured to measuring a current amount of food 3 for each food option 10 during the serving where users 16 are selecting food and thus unloading a certain quantity of the food option 10 from the platter 17 to their plate 18. The sensor unit 2 comprises a scale 8, a camera, or another suitable sensor for measuring the amount of food selected from the platter 17 over time during the serving. The food waste managing system 1 further comprises a control unit 4 configured to receive a measured amount of food from the sensor unit 2, compare the measured amount of food for at least one of the food options 10, determine selection data of one of the food options 10 from said comparison, and determine the initial available amount of each food option 10 and/or type of food options 10 for a future serving based on the determined selection data for minimising food waste.

In another embodiment, the control unit 4 may comprise a computer 44 or processor being arranged remotely from the serving and wherein the computer or processor, which may be cloud-based, performs one or more of the following steps:
- receive a measured amount of food from the sensor unit,
- compare the measured amount of food for at least one of the food options,
- determine selection data of one of the food options from said comparison, and
- determine initial available amounts of each food option and/or type of food options for a future serving based on the selection data for minimising food waste.

The control unit 4 is connected to the sensor unit 2 either by wire or by wireless communication. For this purpose, the control unit 4 comprises a communication module 41 configured to receive data from the sensor unit 2. The control unit 4 may be constituted by any suitable central processing unit CPU, microcontroller, Digital Signal Processor DSP, etc., capable of executing computer programme code. The control unit 4 may be implemented using instructions that enable hardware functionality, for example, by using executable computer programme instructions in a general-purpose or special-purpose processor that may be stored on a computer readable storage medium (disk, memory etc.) 42 also comprised in the food waste managing system 1 and to be executed by such a processor. The control unit 4 may be implemented using any suitable, publicly available processor or Programmable Logic Circuit (PLC). The memory may be implemented using any commonly known technology for computer-readable memories such as ROM, RAM, SRAM, DRAM, FLASH, DDR, SDRAM or some other memory technology etc.

The control unit 4 thus receives information from the sensor unit 2 on how much food is selected from the specific food option 10 at which the sensor unit 2 measures at a given time during the serving. Then, the control unit 4 compares the measured amount of food for e.g. one of the food options 10 with another of the food options 10 from that serving or with the same food option 10 from a previous serving to determine selection data in order to plan the initial amount of the food option 10 at a future serving to minimise unnecessary waste of that food option 10 in the future serving. In the same way, the control unit 4 can compare all measurements in order to determine what is selected first, then second and so forth to determine selection data which can be the amount of a food option 10, order of selection of food options 10, eating habits and so on. By gaining knowledge of the amount of food selected, the type of food selected, the order of selection etc. the chef planning the next serving can reduce the initial amount of the food options 10 not eaten in full and increase the initial amount of the food options 10 which were emptied before the serving ended. In this way, the waste of food can be minimised from one serving to the next. Furthermore, the chef can plan to serve food options 10 which cost less to make or which produces less CO₂, and when changing the amount of one food option 10 the chef knows from the previous serving what other food options 10 to change accordingly. The food eating habits from previous servings are loaded into a database 43 of a computer 44, which may be cloud-based, and will thus give the chef knowledge of what to serve and in what initial amounts so to avoid food waste. For this purpose, the computer 44 is in communication with the control unit 4, preferably using the communication module 41 of the control unit 4. The chef can also be presented with a pre-determined selection of food options, i.e. a menu, if the chef e.g. wants to serve a certain food option, then the computer programme getting information from the database can present him with suggestions for the rest of the food options matching the food option "chicken".

In another embodiment, the control unit 4 may comprise the database 43 and the computer 44, so that the control unit is located remotely from the serving and the sensor units 2.

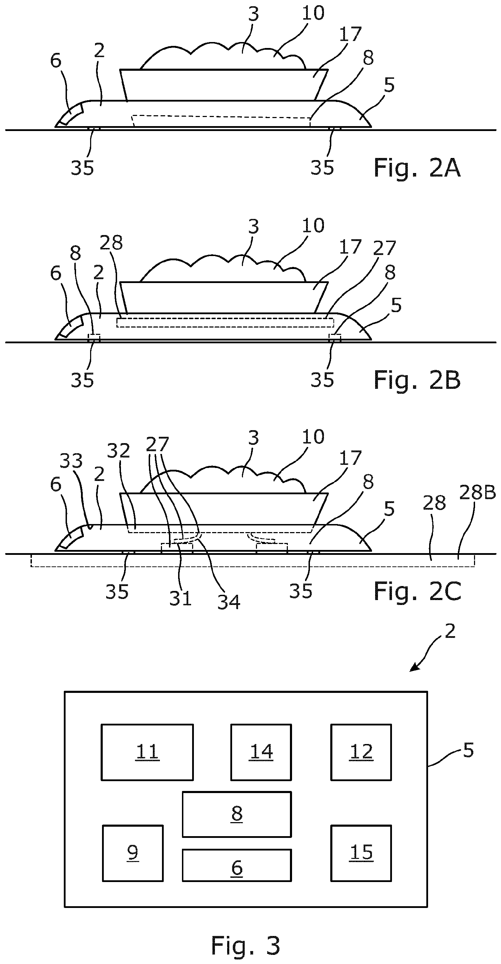

Now turning to Fig. 2A, each sensor unit 2 comprises a display 6 for indicating the type of food option 10 and is configured to display the content of the food option in the form of ingredients, allergens, calories etc. Before starting a serving, each sensor unit 2 may receive the information to be displayed from the control unit 4. The control unit 4 may be arranged remotely from the at least one sensor unit 2 and configured to communicate wirelessly with the sensor units 2. The control unit 4 may receive the information from a remote computer 44, e.g. the same as the computer 44 from which the chef has been planning the menu of the serving.

As seen in Fig. 2A, the sensor unit 2 is arranged underneath each platter 17 with a specific food option 10. The sensor unit 2 comprises a sensor housing 5, and the sensor housing 5 is arranged to support the specific food option 10 of the platter 17 of the serving. The sensor unit 2 comprises a scale 8 for weighing the food taken from the platter 17. The sensor housing is supported by at least three legs 35. As shown in Fig. 3, the sensor unit comprises a battery 9, a storage 11 for storing measured data, an identification tag 12, a communication module 14 (configured to communicate with the communications module 41 of the control unit 4), and/or a timer 15. The scale comprises at least one load cell. The sensor unit 2 may instead of a scale measure the selected amount of food with a camera or similar sensor suitable to measure an amount or quantity of food.

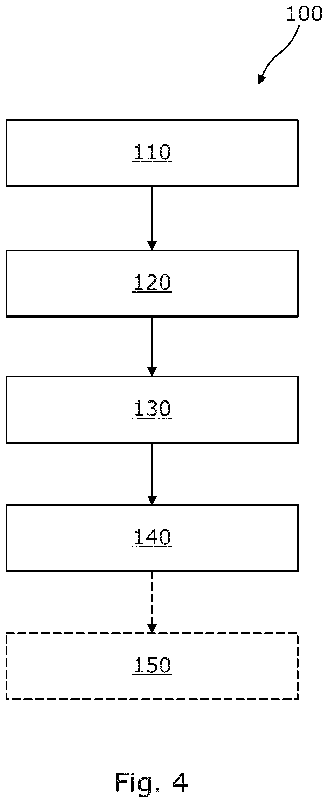

Food waste is minimised by a food waste managing method 100 shown in Fig. 4 for monitoring at least one serving comprising a plurality of users selecting one or more available food options. First, the method comprises to measure 110 an amount of food for each food option during the serving, then to compare 120 the measured amount of food for at least one of the food options, and to determine 130 selection data of one of the food options from said comparison, and subsequently to determine 140 initial available amount of each food option and/or type of food options for a future serving based on the selection data for minimising food waste.

The step of comparing 120 may be performed by comparing a measured amount of food for a specific food option of a first serving with a measured amount of food for the same food option of a second serving. In this way, the same dish such as chicken curry from a previous serving is compared with chicken curry from another serving so as to learn if chicken curry is popular among a certain group of people or on a certain day of the week or a time of year.

The step of comparing 120 may also be performed by comparing a first measured amount of food for a specific food option of a specific serving with a second measured amount of food for the same food option of the same serving. In this way, eating amounts can be determined as to when a certain food option is most often chosen compared to another time during the same serving.

The step of comparing 120 may also be performed by comparing a measured amount of food for a first food option of a specific serving with a measured amount of food for a second food option of the same serving. Hereby, the order of selection from a buffet can be determined so that the chef is given knowledge of e.g. how much rice is selected compared to an accompanying sauce, and if potatoes are present, if these are selected more often than the rice, or the other way around. The order of selection from a buffet can be determined so that the platters can be arranged in a certain order in the buffet for example to motivate users to select a food option producing less CO₂, i.e. motivate the user to reduce their carbon footprint on the environment.

The step of comparing 120 may also be performed by comparing a measured amount of food for a first food option of a first serving with a measured amount of food for a second food option of a second serving. Comparing a first food option from one serving with another food option from another serving can give the chef some knowledge of the correlation between selected food options but only together with some of the above-mentioned comparisons. The first serving may be one serving of a variety of predetermined amounts of food options at one time/day, and the second serving is another serving of a variety of predetermined amounts of food options at one time/day. The first serving may also be the first time a user selects food from a selection of food options and the second serving is then the second time the same user selects food from the serving if this is possible to detect.

The step of determining 130 selection data may be performed by determining a total amount of selected food at a specific time of a specific selected food option during or after one serving. Selection data is thus data of an amount taken from the platter during a certain time period.

The step of determining 130 selection data may also be performed by determining a selection rate of a specific food option during one serving. Selection data is thus data of the selection rate of one or more types of food.

The step of determining 130 selection data may also be performed by determining an order of selection for at least two food options during one serving by identifying the food option being selected after a previously selected food option.

By comparing selection data of rate, order and/or amount of food options from different servings, knowledge of preference for certain food options and the correlation between food options can be identified since within one serving most often one food option is preferred to other food options but if several popular food options are served at the same serving, then the most popular food option can be determined. Furthermore, when selecting one food option users tends to have a preference for selecting certain other food options. From this knowledge from a serving, the initial available amount of each food option and/or type of food options for a future serving based on the selection data can be determined 140 for minimising food waste even further.

The knowledge may also be used to prepare a surplus of a certain food option at a future serving based on selection data from a previous serving in order to improve the customer satisfaction by avoiding that a food option is no longer available because it has been so popular among the previous users that there is no more left on the platter.

In order to identify eating habits, eating patterns, order of selection, preferences of one type of food over another type of food, amount, etc., the food waste managing method further comprises comparing 150 selection data of a first serving with selection data of a second serving. Information about the users of the current serving will also give further knowledge of what a certain group of people eats compared to another group of people. By receiving information about age, occupation, geographical place, weather, time of year etc., the available amount of each food option and/or type of food options for a future serving based on the selection data can be further optimised for minimising food waste. The information can also be information on how many cars drive into a parking lot in the morning in order to plan how much food the kitchen needs to prepare at the lunch serving on the same date. Furthermore, the weather may play a role as the eating patterns may provide information of how much a user eats at during certain weather conditions.

Furthermore, the food waste managing method may further be used for nudging users to select more healthy food options than other less healthy food options by arranging the food options in a certain order at the serving so that the users are presented with the healthy food options first.

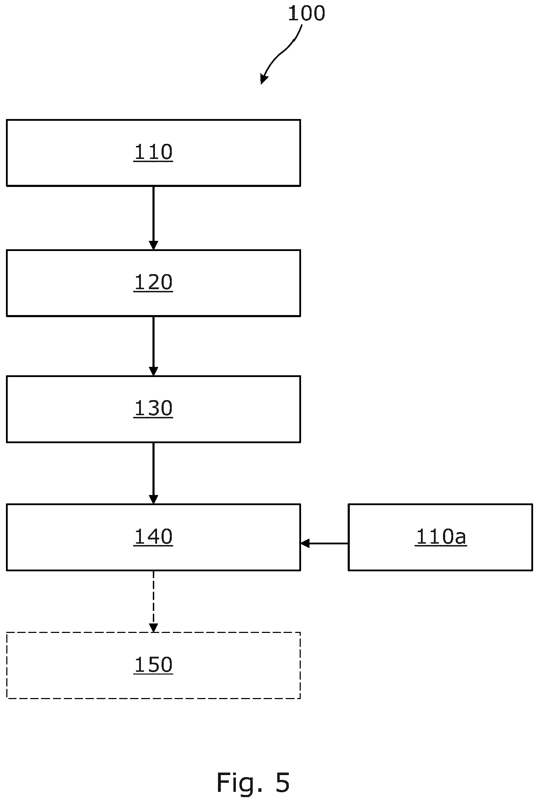

Therefore, the food waste managing method may further comprise receiving 110a information about the users of a future serving as shown in Fig. 5, so that the chef planning e.g. the next day's menu can thus provide information about the users of the future serving to minimise food waste from the future serving. Thus, the food waste managing method may comprise the step of determining initial available amount of each food option and/or type of food options for the future serving based on the received information about users of the current serving and/or of users of the future serving and/or of users of a previous serving.

The user selects one or more food options onto a platter and the food waste managing method may further comprise measuring, e.g. weighing, the platter after the serving in order to determine whether the selected food option(s) has been eaten by the user.

Furthermore, the food waste managing method may further comprise sending a notification to a control unit in order to notify personnel to fill up the food option based on the selection data. In addition, the food waste managing method may further comprise continuously transmitting the selection data to the control unit so as to send the selection data "live" to the kitchen or the chef being responsible for the current serving. The system may further comprise at least a tablet or an app on at least one mobile phone for receiving the selection data, the notification and/or the live data.

The selection of food is an individual choice; however, all users have preferences and eating habits with regards to order of selection and amount. By learning of these eating habits, order of selection and amount of each food option from a substantial amount of servings, this knowledge can be used to predict the more exact amount of food of each food option which is needed in future servings but also the correlations between food options. Hereby, the food options can be selected so as to better match the users of the future servings but also to minimise the cost of preparing the serving and/or reduce the carbon footprint for that serving. The chef planning a menu of food options can thus select food options so as to better match the preferences of a certain group of users and to minimise the food waste and/or the minimise the cost and/or the carbon footprint.

When knowing of eating habits, eating patterns, order of selecting, amount, selection rate etc, the menu can be selected so that when serving bread then perhaps earlier selection data shows that then less rice is selected. For example, rice has a larger carbon footprint than bread, however, bread requires more working power to make and is therefore more costly to serve. So, in order to reduce cost, the serving of rice should be chosen over bread, but in order to reduce the carbon footprint the serving of bread should be chosen over rice. Thus, by knowing of the correlation between food options the food waste can be minimised together with e.g. cost and/or carbon footprint.

Furthermore, by knowing of what preferences one group of people has over another group of people, e.g. blue collar labour versus white collar labour, the menu can be more accurately planned in order to minimise food waste. Furthermore, by monitoring the amount of selected food options during a lot of servings, knowledge of how much one group eats when exposed to a certain serving of various food options is gained but also what food options is selected over other food options. Thus, the food waste managing method gives knowledge of what is selected and at which amount and in what order so that the initial available amount of each food option and/or type of food options for a future serving can be chosen based on the selection data for minimising food waste.

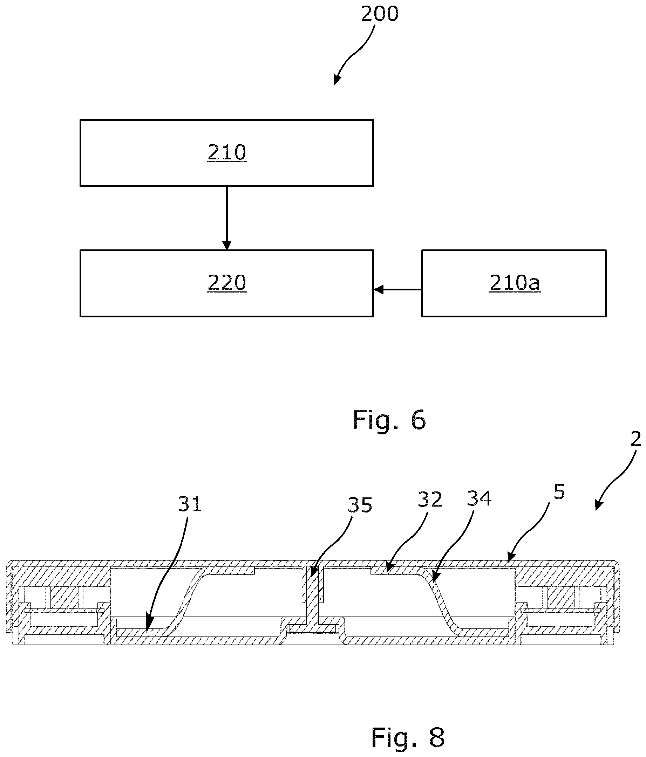

Selection data is stored in the control unit 4 and when planning a future serving the food waste managing method 200, as shown in Fig. 6, comprises receiving 210 selection data of one or more of the food options, where said selection data corresponding to a comparison of measured amount of food for at least one of the food options during a previous serving, and then determining 220 the initial available amount of each food option and/or type of food options for a future serving based on the selection data for minimising food waste. Furthermore, the food waste managing method 200 may comprise receiving 210a information about the users of a future serving, as shown in Fig. 6.

During the measuring of an amount of food for each food option during the serving, the control unit 4 is loaded with this information and then the measured amount is compared in order to determine selection data which forms the basis for determining the initial available amount of each food option and/or type of food options for a future serving. The control unit 4 is therefore configured to access and add data to a database of information on eating habits, order of selection, amount of a food option, a selection rate etc. so that the future serving can be planned to minimise food waste and/or carbon footprint and/or cost.

One user selecting an amount of one or more food options is likely to select the same if presented with the same choice at another time and such knowledge of knowing what group such user belongs to can help determine the right food options at a future serving in order to minimise the food waste. However, the same user may change preferences along a year's passing as many people eat lighter food in the summer than in the winter. So, such seasonal variation can also be added to the database so as to optimise a future serving at another time of the year. Another tendency which the food waste managing method can provide information about is information on varying amounts food eaten over a week, as this may also vary so that some eat more in one weekday than in another weekday.

Again returning to Fig. 1, the food managing system 1 preferably comprises a computer-readable medium. The computer-readable medium is in this embodiment represented e.g. by a memory chip forming part of the medium 42 of the control unit 4. However, the computer-readable medium may be another memory device arranged remotely from the control unit 4, such as in the computer 44. The memory chip may be a flash memory, that is, a non-volatile data storage that can be electrically erased and re-programmed. The memory chip is programmed with instructions that when loaded e.g. into a processor of the computer 44 or the control unit 4, such as in a PC or special purpose computer, executes a method or procedure according to the embodiments disclosed above. The memory chip is arranged to be connected to and read by a reading device, such as the computer 44 or control unit 4, for loading the instructions. It should be noted that a computer-readable medium may also be other media such as hard drives or other memory technologies commonly used. The instructions may also be downloaded from the computer-readable medium 42 via a wireless interface to be loaded into the control unit 4, or computer 44.

Thus, the present technology may be embodied as a method in a device or system with a computer programme product. Accordingly, the present technology may take the form of an entirely hardware embodiment, or an embodiment combining software and hardware aspects all generally referred to herein as a device. Furthermore, the software of the present technology may take the form of a computer programme product. The computer programme product may be stored on a computer-usable storage medium having computer-usable programme code embodied in the medium. The embodiments of this disclosure described with reference to the drawings comprise a computer apparatus and processes performed in the computer apparatus. The programme may be in the form of source code, object code i.e. a code suitable for use in the implementation of the method. The carrier may be any entity or device capable of carrying the program. For example, the carrier may be a record medium, computer memory, read-only memory, computer-readable medium or an electrical carrier signal. Embodiments according to the technology may be carried out when the computer programme product is loaded and run in a system or device having computer capabilities, e.g. the computer 44 and/or the control unit 4.

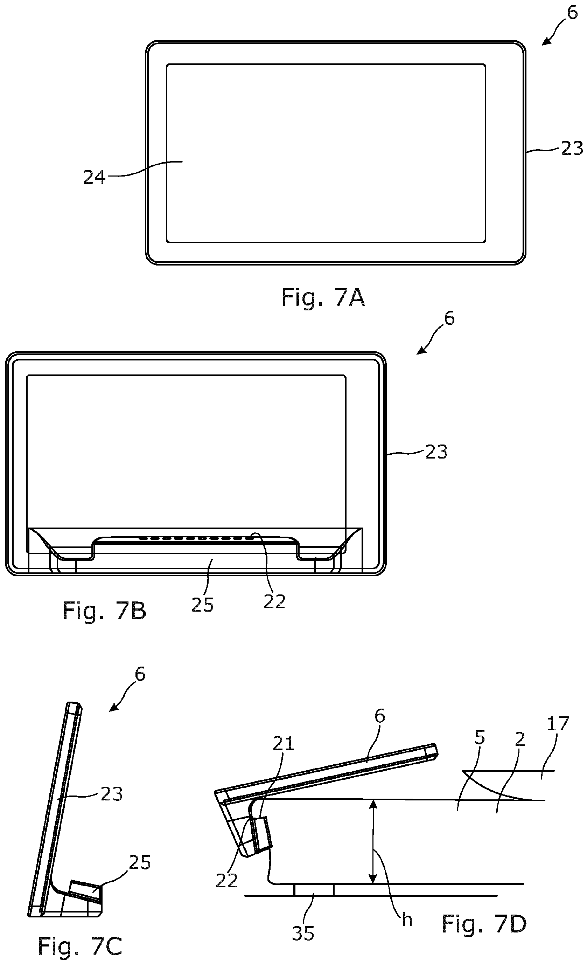

Fig. 7A shows the display as being a detachable display 6, and the display is seen from the front showing an E ink displaying area for diplaying information of the content of the food option and further information on ingredients, allergens, calories, nutrition facts etc. The display is an E ink display, also called electric ink display. By having an electric ink display, once the information is loaded onto the display, the display does not use any more power and can be arranged on the table at the side or front of the sensor housing supporting the platter with the food option. In another embodiment, the display may be a tablet or similar device for displaying information.

Fig. 7B shows the detachable display of Fig. 7A from the back side showing a base 25 for suppporting an upright portion 23 of the display. Thus, the base 25 provides a support for the upright portion so that the display is able to stand on its own, as shown in Fig. 7C. The upright portion 23 comprises the E ink displaying area 24 as shown in Fig. 7A.

Fig. 7D shows the detachable display of Fig. 7A attached on an outside of a sensor housing 5 supporting the platter 17 with a food option. The sensor housing 5 comprises an electric connection 21 for communicating with the display, and the display comprises an electric connection 22 for communicating with the electric connection of the sensor housing. The communication between the electric connection of the display and the electric connection of the sensor housing is in the form of pogo pins; however, in another embodiment, the communication could be by means of induction, and/or radio communication. Thus, the communication between the electric connection of the display and the electric connection of the sensor housing could be wireless. The sensor housing is plate shaped having a height h of 0.5-5.0 cm.

In Fig. 2B, the sensor unit 2 further comprises a temperature altering element 28 attached to the sensor housing 5. The temperature altering element 28 also functions as a temperature distributing element 27 so as to distribute temperature, such as heating or cooling, from the temperature altering element to the sensor housing and further on to the platter and the food option.

In Fig. 2C and Fig. 8, the sensor unit comprises a temperature distributing element 27 comprising a first contact element 31 for contacting a table temperature altering element 28, 28B and a second contact element 32 connected to an inner face 33 of the sensor housing. The first contact element and the second contact element are connected by means of a temperature conducting wire 34. The first contact element, the second contact element, and the temperature conducting wire are encapsulated by insulation. The insulation may flexible, i.e. more flexible than the sensor housing. In this way, the heat or cold from the table temperature altering element 28, 28B is transferred to the first contact element 31 through the temperature conducting wire 34 and further on to the second contact element 32 which is in contact with the inner face of the sensor housing for heating or cooling the platter therethrough. In Fig. 8, the leg 35 is fixedly connected to the sensor housing 5 and moves with the housing when a platter is placed on top of the housing.

Although the invention has been described in the above in connection with preferred embodiments of the invention, it will be evident for a person skilled in the art that several modifications are conceivable without departing from the invention as defined by the following claims.

## Claims

1. A food waste managing method (100) for at least one serving comprising a plurality of users selecting one or more available food options:
- measuring (110) an amount of food for each food option during the serving,
- comparing (120) the measured amount of food for at least one of the food options,
- determining (130) selection data of one of the food options from said comparison, and
- determining (140) initial available amount of each food option and/or type of food options for a future serving based on the selection data for minimising food waste.

2. A food waste managing method according to claim 1, wherein the step of comparing is performed by comparing measured amount of food for a specific food option of a first serving with a measured amount of food for the same food option of a second serving.

3. A food waste managing method according to claim 1, wherein the step of comparing is performed by comparing a first measured amount of food for a specific food option of a specific serving with a second measured amount of food for the same food option of the same serving.

4. A food waste managing method according to claim 1, wherein the step of comparing is performed by comparing a measured amount of food for a first food option of a specific serving with a measured amount of food for a second food option of the same serving.

5. A food waste managing method according to claim 1, wherein the step of comparing is performed by comparing a measured amount of food for a first food option of a first serving with a measured amount of food for a second food option of a second serving.

6. A food waste managing method according to any of the preceding claims, wherein the step of determining selection data is performed by determining a total amount of selected food at a specific time of a specific selected food option during or after one serving.

7. A food waste managing method according to any of claims 1-5, wherein the step of determining selection data is performed by determining a selection rate of a specific food option during one serving.

8. A food waste managing method according to any of claims 1-5, wherein the step of determining selection data is performed by determining an order of selection for at least two food options during one serving by identifying the food option being selected after a previously selected food option.

9. A food waste managing method according to any of the preceding claims, further comprising comparing selection data of a first serving with selection data of a second serving.

10. A food waste managing method according to any of the preceding claims, wherein the step of determining initial available amount of each food option and/or type of food options for the future serving is based on received information about users of the current serving and/or about users of the future serving and/or about users of a previous serving.

11. A food waste managing method (200) for at least one serving comprising a plurality of users selecting one or more available food options:
- receiving (210) selection data of one of the food options, said selection data corresponding to a comparison of measured amount of food for at least one of the food options during a previous serving, and
- determining (220) initial available amounts of each food option and/or type of food options for a future serving based on the selection data for minimising food waste.

12. A food waste managing system (1) for monitoring at least one serving comprising a plurality of users selecting one or more available food options (10), comprising:
- at least one sensor unit (2) configured to measuring an amount of food (3) for each food option during the serving, and
- a control unit (4) configured to:
- receive a measured amount of food from the sensor unit,
- compare the measured amount of food for at least one of the food options,
- determine selection data of one of the food options from said comparison,
- determine initial available amounts of each food option and/or type of food options for a future serving based on the selection data for minimising food waste.

13. A food waste managing system according to any of claims 12, wherein the control unit is arranged remotely from the at least one sensor unit and configured to communicate wirelessly with the at least one sensor unit.

14. A sensor unit configured to form part of the system of claim 12-13.

15. A computer programme, comprising programme instructions for causing a computer to perform the method of managing food waste as defined in any of claims 1-11 when the programme is run on the computer.

16. A computer programme product, comprising a computer-readable medium, having thereon computer programme code means, when said computer programme product is loaded, to make a computer execute the method of managing food waste as defined in any of claims 1-11.
